## Europäisches Patentamt
## European Patent Office
## Office européen des brevets

(11) Numéro de publication: **0 085 203 B1**

(12) **FASCICULE DE BREVET EUROPEEN**

(45) Date de publication du fascicule du brevet:
26.02.86

(21) Numéro de dépôt: 82201646.5

(22) Date de dépôt: 21.12.82

(51) Int. Cl.⁴: **H 02 P 7/62, H 02 M 7/48**

(54) Dispositif de stabilisation du couple d'un moteur électrique à commutation électronique.

(30) Priorité: 28.12.81 CH 8303/81

(43) Date de publication de la demande:
10.08.83 Bulletin 83/32

(45) Mention de la délivrance du brevet:
26.02.86 Bulletin 86/9

(84) Etats contractants désignés:
DE FR GB IT NL SE

(56) Documents cités:
DE - A - 2 624 597
DE - B - 1 613 776
GB - A - 2 084 357

Patent Abstracts of Japan, vol. 6, no. 9, 20 janvier 1982

(73) Titulaire: SPINCOR S.A., 3-5 rue du Grand-Pré,
CH-1000 Lausanne 16 (CH)

(72) Inventeur: Nguyen Duc, Nghia, Chemin des Mouettes 2B,
CH-1028 Preverenges (CH)

(74) Mandataire: Meylan, Robert Maurice et al, c/o Bugnion
SA Conseils en Propriété Industrielle 10, Route de
Florissant Case Postale 375, CH-1211 Genève 12 -
Champel (CH)

EP 0 085 203 B1

## Description

La présente invention a pour objet un dispositif de stabilisation du couple d'un moteur électrique à commutation électronique alimenté par une source de courant continu au moyen d'un convertisseur de fréquence composé d'un convertisseur de courant et d'un onduleur commandé par un générateur de fréquence à fréquence variable, dispositif comprenant des moyens de comparaison d'une grandeur électrique liée à la vitesse du moteur à une grandeur électrique proportionnelle à la tension instantanée de la source de courant appliquée aux bornes du convertisseur et délivrant une grandeur correspondant à l'écart mesuré, et des moyens pour appliquer au générateur de fréquence une grandeur de correction.

Les installations comportant un moteur électrique à commutation électronique telles que définis ci-dessus sont actuellement bien connues et largement utilisées dans de nombreux domaines (voir par exemple Traité d'Electricité de l'Ecole Polytechnique Fédérale de Lausanne, volumes XV et XVI, éditions 1978 et 1979).

Lorsqu'un tel moteur est entrainé à basses vitesses, il peut présenter des irrégularités de vitesse, qui se traduisent par des pulsations de couple atteignant souvent des valeurs inadmissibles. La raison principale de cette instabilité est à mettre sur le compte de la variation de l'impédance de la source de courant continu alimentant le moteur. Cette source voit en effet son impédance interne augmenter au fur et à mesure que la vitesse de rotation du moteur diminue; on en a déduit que l'énergie réactive du moteur peut alors créer une tension d'ondulation s'ajoutant à la tension de la source et modifiant ainsi, en retour, l'excitation du moteur, mais en contre-phase, provoquant ainsi une instabilité de la vitesse du moteur.

Il a déjà été proposé, dans de telles installations, de stabiliser le rapport U/f, U représentant la tension appliquée au convertisseur de fréquence et f la fréquence de commande du convertisseur, en comparant une tension proportionnelle à la tension instantanée de la source de courant continu appliquée aux bornes du convertisseur à une tension proportionnelle à la fréquence de commande du convertisseur, et d'appliquer l'écart mesuré à un circuit distinguant entre le fonctionnement du moteur en moteur ou en générateur pour maintenir la tension de sortie d'un limiteur de pente à l'amplitude présente, correspondant à une fréquence déterminée, jusqu'à ce qu'un équilibre soit à nouveau atteint au niveau du comparateur (DE—A—26 24 597). Cette méthode, qui se réfère à la fréquence de commande, ne permet cependant pas d'assurer une stabilisation suffisante à basses vitesses, c'est-à-dire lorsque la fréquence de commande est relativement basse car elle ne tient pas compte des facteurs mis en évidence au paragraphe précédent.

On connait également des installations de ce type dans lesquelles la tension continue d'alimentation du convertisseur est réglée et où la fréquence de commande est contrôlée en fonction de la tension continue d'alimentation (DE—B—16 13 776).

La présente invention a pour but de stabiliser la vitesse, en particulier à bas régime, et par conséquent le couple. La solution adoptée consiste à utiliser la composante alternative résultant de la tension d'ondulation superposée à la tension continue d'alimentation pour corriger la phase du champ tournant statorique. Cette correction de phase correspondant à une correction de la vitesse de consigne déterminée par la fréquence appliquée au convertisseur.

Le dispositif selon l'invention est caractérisé en ce qu'il comprend des moyens de mesure d'une grandeur électrique proportionnelle à la vitesse du moteur pour appliquer aux moyens de comparaison une grandeur électrique correspondant à la vitesse instantanée du moteur et en ce que l'écart mesuré par les moyens de comparaison correspond à l'écart entre une valeur de consigne du rapport des deux grandeurs comparées et la valeur mesurée de ce rapport.

Ce dispositif de stabilisation, branché en permanence, a pour effet complémentaire, en asservissant le champ tournant à la tension d'alimentation instanée, d'empêcher le rotor de tourner à une vitesse dépassant celle du champ tournant statorique.

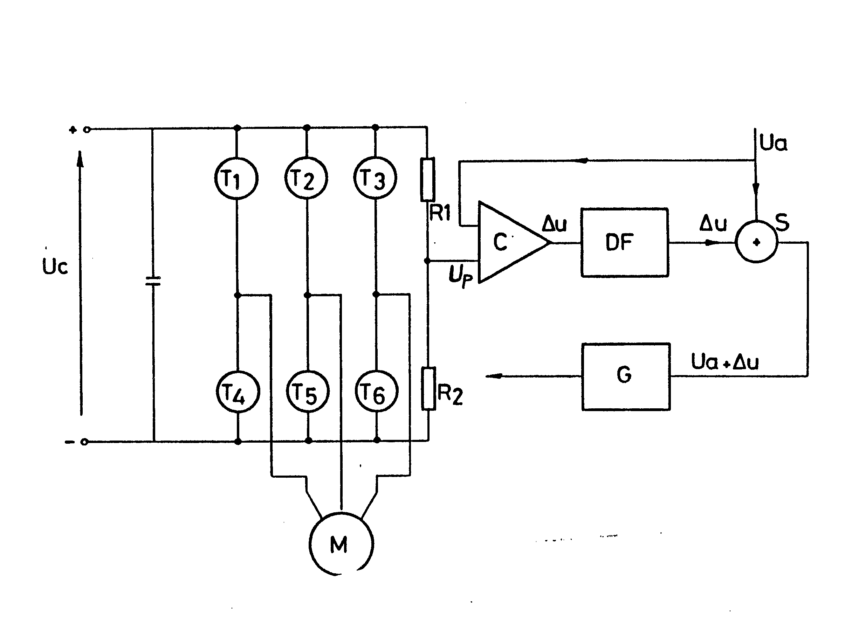

Le dessin annexé représente schématiquement un exemple de réalisation du dispositif selon l'invention.

L'unique figure du dessin représente schématiquement un moteur à induction M triphasé alimenté à partir d'une source de courant continu Uc au moyen d'un convertisseur de fréquence composé d'un convertisseur de courant et d'un onduleur triphasé, dont on a représenté schématiquement les trois paires d'éléments de commutation T1/T4, T2/T5, T3/T6, dont la commutation est commandée selon une séquence bien définie par un générateur de fréquence variable G. Tous ces éléments sont bien connus de l'homme de l'art et peuvent être exécutés de toute manière connue.

Le moteur M est supposé travailler à couple constant, ce qui signifie qu'à une vitesse de rotation donnée doit correspondre une tension d'alimentation Uc donnée, pour avoir un rapport U/f égal constant, f représentant la fréquence du champ tournant statorique.

En parallèle au convertisseur de courant, c'est-à-dire à la source, est branché un diviseur de tension R1/R2 délivrant une tension Up appliquée à un comparateur C auquel est appliquée d'autre part une tension Ua proportionnelle à la vitesse de rotation du moteur. L'écart $\Delta U$ délivré par le comparateur C est appliqué à un circuit sommateur S à travers un discriminateur de fréquence DF dont le rôle est de rejeter toutes les composantes étrangères à celles engendrées par le moteur. Le sommateur S ajoute l'écart $\Delta U$ à la valeur de consigne Ua, cette tension étant appliquée au générateur de fréquence G.

Comme il existe une corrélation étroite entre la vitesse de rotation du moteur et la tension d'alimentation de celui-ci, le comparateur C, auquel sont appliquées des tensions proportionnelles à ces deux grandeurs, compare à chaque instant ces deux grandeurs dont le rapport doit rester constant. Tout écart Δ U est ajouté ou retranché de la valeur de consigne Ua et cette valeur de consigne ainsi corrigée est appliquée au générateur de fréquence G, lequel modifie en conséquence la fréquence appliquée à l'onduleur c'est-à-dire la fréquence du courant d'alimentation du moteur et partant sa vitesse.

L'invention peut bien entendu être mise en oeuvre par tout autre moyen de régulation connu.

### Revendication

Dispositif de stabilisation du couple d'un moteur électrique (M) à commutation électronique alimenté par une source de courant continu (Uc) au moyen d'un convertisseur de fréquence composé d'un convertisseur de courant et d'un onduleur ($T_1$ à $T_6$) commandé par un générateur de fréquence (G) à fréquence variable, dispositif comprenant des moyens de comparaison (C) d'une grandeur électrique liée à la vitesse du moteur à une grandeur électrique (Up) proportionnelle à la tension instantanée de la source de courant (Uc) appliqué aux bornes du convertisseur et délivrant une grandeur correspondant à l'écart mesuré, et des moyens pour appliquer au générateur de fréquence une grandeur de correction, caractérisé en ce qu'il comprend des moyens de mesure d'une grandeur électrique (Ua) proportionnelle à la vitesse du moteur pour appliquer aux moyens de comparaison (C) une grandeur électrique (Ua) correspondant à la vitesse instantanée du moteur et en ce que l'écart (Δ U) mesuré par les moyens de comparaison correspond à l'écart entre une valeur constante de consigne du rapport des deux grandeurs comparées et la valeur mesurée de ce rapport.

### Patentanspruch

Vorrichtung zur Stabilisierung des Drehmomentes eines elektrischen Motors (M) mit elektronischer Umschaltung, welcher von einer Gleichstromquelle (Uc) mittels eines Frequenzumformers gespeist wird, der seinerseits aus einem Stromrichter und einem Wechselrichter ($T_1$ bis $T_6$) besteht, gesteuert von einem Frequenzgenerator (G) mit veränderlicher Frequenz, mit einer Einrichtung zum Vergleich (C) einer elektrischen, von der Geschwindigkeit des Motors abhängigen Grösse mit einer elektrischen, der jeweiligen Stromquellenspannung (Uc) an den Klemmen des Umformers proportionalen Grösse (Up) und die eine der gemessenen Abweichung entsprechende Grösse liefert sowie mit einer Einrichtung, die dem Frequenzgenerator eine Korrekturgrösse zuführt, dadurch gekennzeichnet, dass sie eine Einrichtung zum Messen einer elektrischen, der Motorgeschwindigkeit proportionalen Grösse (Ua) aufweist, die der Vergleichseinrichtung (C) eine elektrische, der jeweiligen Motorgeschwindigkeit entsprechende Grösse (Ua) zuführt, und dass die von der Vergleichseinrichtung gemessene Abweichung (ΔU) der Abweichung zwischen einem konstanten Sollwert des Verhältnisses der beiden verglichenen Grössen und dem gemessenen Wert dieses Verhältnisses entspricht.

### Claim

Device for stabilizing the torque of an electric motor (M) of the electronic commutator type, supplied with current from a dc source (Uc) through a frequency converter comprising a current converter and an inverter ($T_1$—$T_6$) controlled by a variable-frequency frequency generator (G), said device comprising means (C) for comparing an electrical magnitude responsive to the motor speed with an electrical magnitude (Up) proportional to the momentary voltage or said dc voltage source (Uc) applied to the terminals of said converter, and delivering a magnitude corresponding to the measured variation, and means for applying a corrective magnitude to said frequency generator, characterized in that said device further comprises means for measuring an electrical magnitude (Ua) proportional to the motor speed for applying to said comparator means (C) an electrical magnitude (Ua) proportional to the momentary speed of said motor, and that the variation (Δ U) measured by said comparator means corresponds to the difference between a constant regulation voltage of the ratio of the two compared magnitudes and the measured value of said ratio.